# EUROPEAN PATENT APPLICATION

(11) **EP 2 508 709 A2**
(43) Date of publication of application: **10.10.2012**
(21) Application number: 12160078.7
(22) Date of filing: 19.03.2012
(51) Int. Cl.: F01C 21/10

(54) **Pump mounting structure**

(30) Priority: 25.03.2011 JP 2011067924
(71) Applicant: Kabushiki Kaisha Toyota Jidoshokki, Kariya-shi, Aichi-ken (JP)
(72) Inventor: Umeyama, Ryo, Aichi-ken (JP); Yamada, Kazuho, Aichi-ken (JP); Hoshino, Tatsuyuki, Aichi-ken (JP)
(74) Representative: HOFFMANN EITLE

(57) **Abstract**

A pump mounting structure is disclosed. The structure includes a mounting surface (Bd1) on a body (Bd) having an insertion recess (51), and at least one mounting member (41 b) having a mounting portion (43) inserted into the insertion recess (51). The mounting portion (43) has an outer surface (43a) and an insertion hole (42) through which a bolt (B) is inserted. A first gap (S1) is formed between the insertion hole (42) and the bolt (B). A second gap (S2) is formed between the outer surface (43a) of the mounting portion (43) and an inner surface (51a) of the insertion recess (51). A seal member (48) is disposed on an open side of the insertion recess (51).

## Description

### BACKGROUND

In general, a rotation shaft rotated by a driving force from a driving source and a pump portion driven in accordance with the rotation of the rotation shaft are housed in a housing of a pump such as a compressor. The rotation shaft is rotatably supported on the housing via bearings. The housing of the pump is provided with at least three mounting members for mounting the pump to a surface of a body to be mounted that forms an engine compartment, so as to ensure resistance to vibration of the pump, for example. Each mounting member is fastened to the mounting surface with a bolt, thereby mounting the pump to the body. For example, see Japanese Laid-open Patent Publication No. 2009-150236.

The temperature within the engine compartment increases, for example, due to heat generated from the engine of a vehicle while driving. The temperature of each of the housing and the body rises due to the heat generated from the engine, and the housing and body thermally expand with the rise of temperature. Since there occurs a difference in temperature and also a difference in thermal expansion coefficients between the housing and the body, there is a relative difference between the thermal expansion of the housing and the thermal expansion of the body. Thus, the amount of deformation of the housing due to the thermal expansion is different from that of the body. Due to the difference in the amount of deformation between the housing and the body, a load is applied to the bolt for fastening a mounting member and the corresponding mounting surface, so that the housing is deformed with the displacement of the bolt caused by the load applied to the bolt. Then, the position of each bearing provided in the housing is displaced, and the center axis of each of the bearings for supporting the rotation shaft is displaced. When the rotation shaft is rotated in a state where this axial displacement takes place, it is possible that noise is generated and the durability of each bearing is decreased. Particularly, in a mesh-type pump including two or more rotation shafts, it is a great issue if an interference occurs in a pump portion because the shafts are not parallel with each other.

Further, friction is generated between each mounting member and the corresponding mounting surface due to the thermal expansion of the housing and the body, which results in abrasion between the mounting member and the mounting surface. This leads to a reduction in fastening power of the bolt between the mounting member and the mounting surface. As a result, there is a possibility that the pump itself largely vibrates due to vibration of the vehicle during driving.

It is an object of the present invention to provide a pump mounting structure capable of suppressing the axial displacement of a bearing supporting the rotation shaft as much as possible, and capable of suppressing a large vibration of the pump itself.

### SUMMARY OF THE INVENTION

One aspect of the present invention is a pump mounting structure. The pump includes a housing, a rotation shaft and a pump portion being housed in the housing. The rotation shaft is rotated by driving force of a driving source. The pump portion is driven along with rotation of the rotation shaft. The rotation shaft is rotatably supported on the housing via a bearing. A plurality of mounting members are provided for the housing. A bolt is inserted into each of the plurality of mounting members and is fastened to a body to be mounted to thereby mount the pump to the body. The structure includes a mounting surface on the body, at least one mounting member and a seal member. An insertion recess is formed in the mounting surface. The insertion recess includes an inner surface. At least one mounting member has a mounting portion inserted into the insertion recess. The mounting portion has an outer surface and an insertion hole through which the bolt is inserted. A first gap is formed between the insertion hole and the bolt. A second gap is formed between the outer surface of the mounting portion and the inner surface of the insertion recess. The seal member is disposed on an open side of the insertion recess relative to an area between the mounting portion and the insertion recess into which the lubricant is filled.

### BRIEF DESCRIPTION OF THE DRAWINGS

Fig. 1 is a sectional view of an electric roots-type pump according to one embodiment;
Fig. 2A is an enlarged sectional view illustrating a state where a mounting member is mounted on a mounting surface;
Fig. 2B is a sectional view taken along the line 2B-2B of Fig. 2A;
Fig. 3A is a sectional view illustrating a state where a housing and a body to be mounted have thermally expanded;
Fig. 3B is a sectional view taken along the line 3B-3B of Fig. 3A;
Fig. 4A is a sectional view illustrating a state where a housing and a body to be mounted according to another embodiment are thermally expanded; and
Fig. 4B is a sectional view taken along the line 4B-4B of Fig. 4A.

### DESCRIPTION OF THE PREFERRED EMBODIMENTS

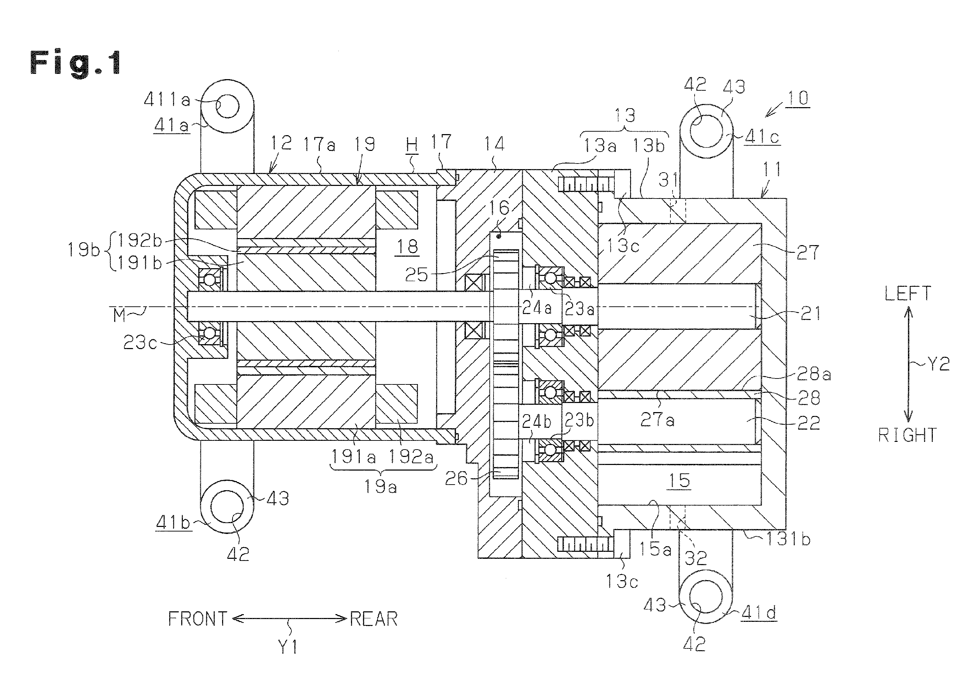

One embodiment of an electric roots-type pump mounting structure will be described with reference to Figs. 1 to 4B. An electric roots-type pump is mounted in a fuel cell powered vehicle, and is used to supply hydrogen to a fuel cell system that generates electric power by supplying oxygen and hydrogen to fuel cells. In the following description, "front" and "rear" of the electric roots-type pump correspond to the front and rear directions indicated by an arrow Y1 illustrated in Fig. 1, and "left" and "right" of the electric roots-type pump correspond to the right and left directions indicated by an arrow Y2 illustrated in Fig. 1.

As illustrated in Fig. 1, an electric roots-type pump 10 includes a pump portion 11 and a driving portion 12. A housing H of the electric roots-type pump 10 is configured so that a gear housing 14 made of aluminum is joined and fixed to the front side of a rotor housing 13 made of iron and a motor housing 17 made of aluminum is joined and fixed to the front side of the gear housing 14. The rotor housing 13 includes a first housing 13a for forming the rotor housing 13 and a second housing 13b for forming the rotor housing 13. The pump portion 11 is formed so that the second housing 13b is fixed to the rear side of the first housing 13a with a fixing bolt 13c. A pump chamber 15 is formed between the first housing 13a and the second housing 13b. The gear housing 14 is joined and fixed to the front side of the first housing 13a, and a gear chamber 16 is formed between the first housing 13a and the gear housing 14.

The driving portion 12 is formed by joining and fixing the motor housing 17 to the front side of the gear housing 14. A motor chamber 13 is formed between the motor housing 17 and the gear housing 14. The motor chamber 18 houses an electric motor 19 serving as a driving source.

A stator 19a is fixed to an inner peripheral surface of the motor housing 17. The stator 19a is configured so that a coil 192a is wound around teeth (not illustrated) of a stator core 191a fixed to the inner peripheral surface of the motor housing 17. A motor rotor 19b is provided within the stator 19a. The motor rotor 19b includes a rotor core 191b fixed to a driving shaft 21 serving as a rotation shaft, and a plurality of permanent magnets 192b provided on a peripheral surface of the rotor core 191b.

The driving shaft 21 is rotatably supported on the first housing 13a and the motor housing 17 via bearings 23a and 23c. A driven shaft 22 provided in parallel with the driving shaft 21 is rotatably supported on the first housing 13a via a bearing 23b. The bearings 23a and 23b are respectively fit into fitting holes 24a and 24b formed in the first housing 13a, thereby being supported on the first housing 13a. The gear chamber 16 houses a driving gear 25, which is fixed to the driving shaft 21, and a driven gear 26, which is fixed to the driven shaft 22, in a state where the driving gear 25 and the driven gear 26 are engaged with each other. The driving shaft 21 and the driven shaft 22 are coupled via the driving gear 25 and the driven gear 26.

A drive rotor 27, which is made of iron and housed in the pump chamber 15, is fixed to the driving shaft 21. A driven rotor 28, which is made of iron and housed in the pump chamber 15, is fixed to the driven shaft 22. The shapes of the driving rotor 27 and the driven rotor 28 bifoliate or gourd in a cross-sectional view orthogonal to the direction along an axis line M (axial direction) of the driving shaft 21. That is, the driving rotor 27 and the driving rotor 28 each have two lobes. The driving rotor 27 and the driven rotor 28 are housed in the pump chamber 15 so that convex teeth 27a of the driving rotor 27 and concave teeth 28a of the driven rotor 28 can be engaged with each other and concave teeth (not illustrated) of the driving rotor 27 and convex teeth (not illustrated) of the driven rotor 28 can be engaged with each other. The rotor housing 13 (second housing 13b) has an suction port 31 for drawing a fluid into the pump chamber 15, and a discharge port 32 for discharging the fluid transferred in the pump chamber 15 to a position opposite to the intake port 31.

In the electric roots-type pump 10 having a structure as described above, the driving of the electric motor 19 causes the driving shaft 21 to rotate, so that the driven shaft 22 is rotated in a direction different from that of the driving shaft 21 through engagement between the driving gear 25 and the driven gear 26. Then, in the pump chamber 15, the driving rotor 27 and the driven rotor 28 synchronously rotate with a phase difference (90 degrees) of the driving shaft 21 and the driven shaft 22. Then, the fluid is drawn into the pump chamber 15 from the suction port 31 in accordance with the synchronous rotation of the driving rotor 27 and the driven rotor 28. The outer surfaces of the rotors 27 and 28 cooperate with an inner peripheral surface 15a of the pump chamber 15 to transfer the fluid drawn into the pump chamber 15. The transferred fluid is discharged to the exterior of the pump chamber 15 from the discharge port 32.

The housing H of the electric roots-type pump 10 configured as described above is provided with first to fourth mounting members 41a, 41b, 41c, and 41 d each serving as a mounting member. Each of the mounting members 41a, 41b, 41c, and 41d is used to mount the electric roots-type pump 10 to a body Bd serving as a body to be mounted that forms a fuel cell system mounted in a fuel cell powered vehicle.

The first mounting member 41a is provided so as to extend in the leftward direction from an outer peripheral surface 17a of the motor housing 17. The second mounting member 41b is provided so as to extend rightward from the outer peripheral surface 17a of the motor housing 17. The third mounting member 41c is provided so as to extend leftward from an outer peripheral surface 131b of the second housing 13b. The fourth mounting member 41d is provided so as to extend rightward from the outer peripheral surface 131b of the second housing 13b. In the motor housing 17, the first mounting member 41a and the second mounting member 41b are disposed at positions opposing to each other in the right-left direction. In the second housing 13b, the third mounting member 41c and the fourth mounting member 41d are disposed at positions opposing each other in the right-left direction.

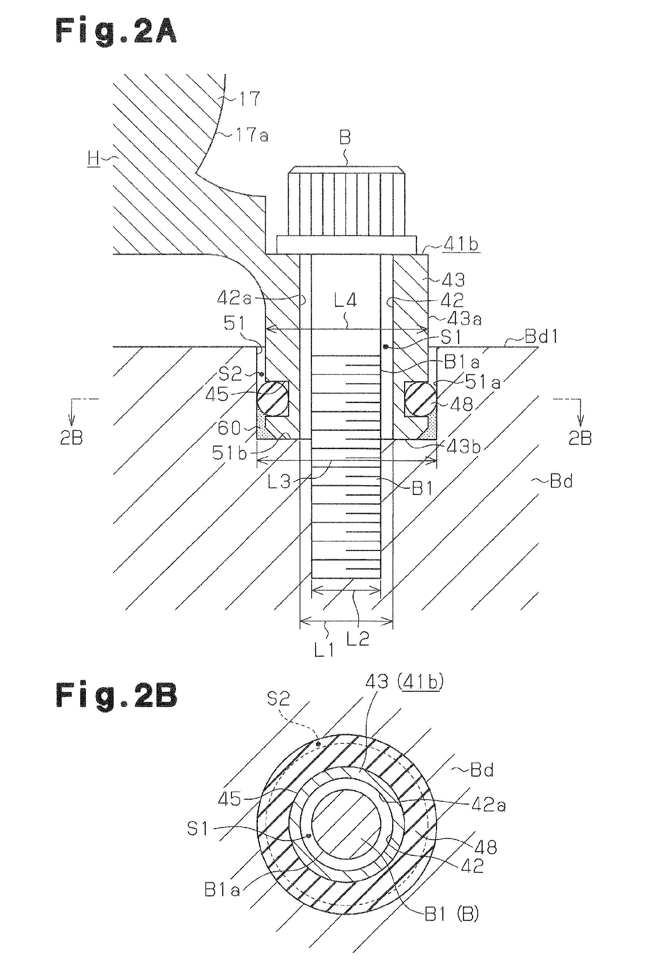

The first mounting member 41a has an insertion hole 411a having a circular shape through which a bolt B (see Figs. 2A and 2B) is inserted. The bolt B is inserted into the insertion hole 411a and fastened to the body Bd, thereby fastening the first mounting member 41a with respect to the body Bd rigidly.

Next, a structure for mounting the second mounting member 41b will be described in detail. It should be noted that structures for mounting the third and fourth mounting members 41c and 41d are substantially the same as the structure for mounting the second mounting member 41b, so detailed description thereof is omitted.

As illustrated in Figs. 2A and 2B, the second mounting member 41b has a cylindrical mounting portion 43. A lower portion of the mounting portion 43 is inserted into an insertion recess 51. The insertion recess 51 is defined by a surface Bd1 of the body Bd and has a circular cross-sectional area. An insertion hole 42 having a circular shape is formed within the mounting portion 43 and the bolt B is inserted through the insertion hole 42. A diameter L1 of the insertion hole 42 is larger than a diameter L2 of a shaft portion B1 of the bolt B. Accordingly, in a state where the shaft portion B1 of the bolt B is inserted into the insertion hole 42, a first gap S1 is formed over the circumference in the circumferential direction between an inner peripheral surface 42a defining the insertion hole 42 and an outer peripheral surface B1a of the shaft portion B1 of the bolt B.

On an outer peripheral surface 43a, which is an outer surface of the mounting portion 43, a groove 45 extending over the circumference is formed. A seal member 48 is disposed in the groove 45. A part of the seal member 48 projects toward the outside from the outer peripheral surface 43a of the mounting portion 43.

A diameter L3 of the insertion recess 51 is larger than an outer diameter L4 of the mounting portion 43. Accordingly, a second gap S2 is formed over the circumference in the circumferential direction between the outer peripheral surface 43a of the mounting portion 43 and an inner peripheral surface 51a of the insertion recess 51. Lubricant oil 60 is filled into the insertion recess 51. The lubricant oil 60 fills the insertion recess 51 to below a location where the seal member 48 is disposed to provide lubrication between the bottom surface 43b of the mounting portion 43 and the bottom surface 51b of the insertion recess 51. The seal member 48 seals the opening side of the insertion recess 51 relative to the area between the outer peripheral surface 43a of the mounting portion 43 and the inner peripheral surface 51a of the insertion recess 51 into which the lubricant is filled, thereby preventing the lubricant oil 60 from leaking out of the insertion recess 51.

The bolt B is inserted into each insertion hole 42 and fastened to the body Bd, thereby fastening the second to fourth mounting members 41b, 41c, and 41d to the body Bd. Fastening of the mounting members 41a, 41b, 41c, and 41d to the body Bd allows the electric roots-type pump 10 to be mounted to the body Bd.

Next, the operation of this embodiment will be described.

In a fuel cell system, for example, electric power is generated by supplying oxygen and hydrogen to fuel cells, so that the temperature of each of the housing H and the body Bd rises due to heat generated by electric power generation. Along with the temperature rise, the housing H and the body Bd are thermally expanded. Here, there occur a difference in temperature and also a difference in thermal expansion coefficients between the housing H and the body Bd, there is a relative difference between the thermal expansion of the housing H and the thermal expansion of the body Bd. Thus, the amount of deformation of the housing H due to the thermal expansion is different from that of the body Bd.

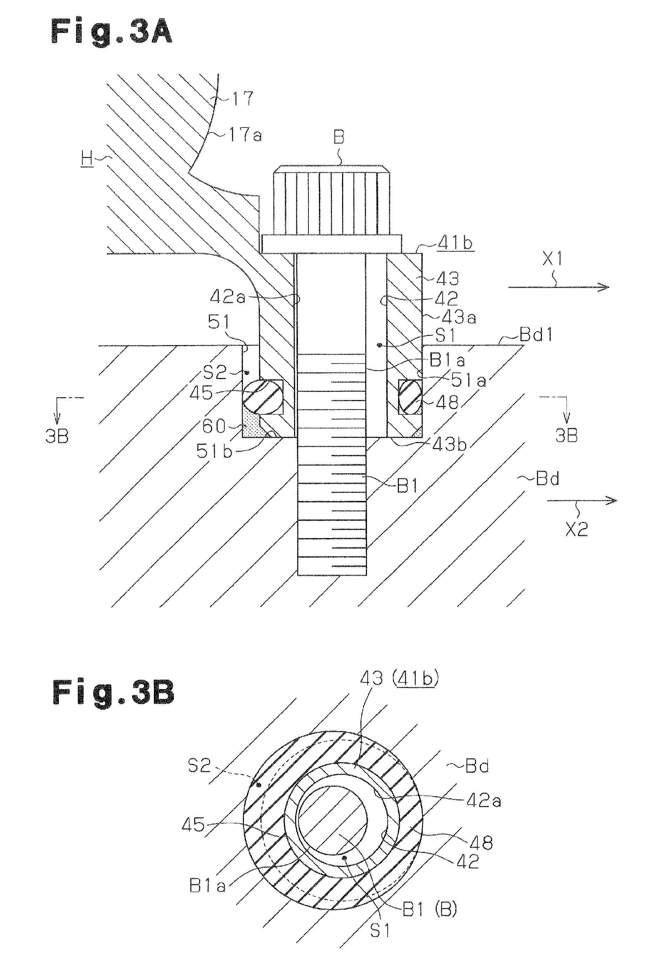

Figs. 3A and 3B illustrate an example where the temperature of the housing H is higher than that of the body Bd and the amount of deformation of the housing H in a direction spaced apart from the first mounting member 41a, i.e., the direction indicated by the arrow X1 in Fig. 3A, is larger than the amount of deformation of the body Bd in a direction spaced apart from the first mounting member 41a, i.e., the direction indicated by the arrow X2 in Fig. 3A. In this case, the bolt B is allowed to move along a direction orthogonal to the axial direction of the driving shaft 21 along with the thermal expansion of the body Bd within the insertion hole 42 by the amount corresponding to the first gap S1. Specifically, since the amount of deformation of the housing H is larger than the amount of deformation of the body Bd, the bolt B is disposed within the insertion hole 42 at the position closer to the first mounting member 41a than a central portion of the insertion hole 42.

The mounting portion 43 of the second mounting member 41b is allowed to move along the direction orthogonal to the axial direction of the driving shaft 21 from the first mounting member 41a within the insertion recess 51 by the amount corresponding to the first gap S1 and the second gap S2. Specifically, since the amount of deformation of the housing H is larger than the amount of deformation of the body Bd, the mounting portion 43 is arranged within the insertion recess 51 at the position closer to the opposite side of the first mounting member 41a than a central portion of the insertion recess 51. That is, the bolt B and the mounting portion 43 move relative to each other in accordance with the difference between the amount of deformation of the housing H and the amount of deformation of the body Bd to suppress the load on the bolt B.

Here, even when the mounting portion 43 moves within the insertion recess 51, the seal member 48 is elastically deformed, thereby maintaining a seal between the outer peripheral surface 43a of the mounting portion 43 and the inner peripheral surface 51a of the insertion recess 51 and preventing the lubricant oil 60 from leaking out of the insertion recess 51.

Similarly, the mounting portion 43 of the third mounting member 41c is allowed to deform so as to be spaced apart in the axial direction of the driving shaft 21 from the first mounting member 41a within the insertion recess 51 by the amount corresponding to the first gap S1 and the second gap S2. Further, the bolt B is allowed to move along the axial direction of the driving shaft 21 along with the deformation of the body Bd within the insertion hole 42 by the amount corresponding to the first gap S1.

Similarly, the mounting portion 43 of the fourth mounting member 41d is allowed to deform so as to intersect the axial direction of the driving shaft 21 from the first mounting member 41a within the insertion recess 51 and to be spaced apart from the third mounting member 41c, by an amount corresponding to the first gap S1 and the second gap S2. Further, the bolt B is allowed to intersect the axial direction of the driving shaft 21 and move apart from the third mounting member 41c along with the deformation of the body Bd within the insertion hole 42, by an amount corresponding to the first gap S1. Accordingly, even when there occurs a difference between the amount of deformation of the housing H and that of the body Bd, a load applied to the bolt B is suppressed.

Additionally, since the lubricant oil 60 is filled into the insertion recess 51, the lubricant oil 60 can provide excellent lubrication between the bottom surface 43b of the mounting portion 43 and the bottom surface 51b of the insertion recess 51. Therefore, abrasion between the bottom surface 43b of the mounting portion 43 and the bottom surface 51b of the insertion recess 51 is suppressed.

The embodiment described above can provide the following advantageous effects.
(1) Each of the second to fourth mounting members 41b, 41c, and 41 d includes the mounting portion 43 having the insertion hole 42, and the mounting portion 43 is inserted into the insertion recess 51 of the surface Bd1 to be mounted. The first gap S1 is formed between the insertion hole 42 and the bolt B, and the second gap S2 is formed between the mounting portion 43 and the insertion recess 51. The lubricant oil 60 is filled into the insertion recess 51. Accordingly, when there occurs a difference between the amount of deformation due to thermal expansion of the housing H and that of the body Bd, the bolt B is allowed to move within the insertion hole 42 along with the thermal expansion of the body Bd by the amount corresponding to the first gap S1, and the mounting portion 43 is allowed to move within the insertion recess 51 by the amount corresponding to the first gap S1 and the second gap S2. Therefore, even when there occurs a difference between the amount of deformation of the housing H and that of the body Bd, a load applied to the bolt B can be suppressed. Consequently, deformation of the housing H can be suppressed, and an axial displacement of each of the bearings 23a and 23b, and 23c for supporting the driving shaft 21 and the driven shaft 22 can be suppressed as much as possible.

The lubricant oil 60 is filled into the insertion recess 51. Accordingly, even when there occurs a difference between the amount of deformation of the housing H and that of the body Bd and the mounting portion 43 moves within the insertion recess 51 so that the bottom surface 43b of the mounting portion 43 and the bottom surface 51b defining the insertion recess 51 come into sliding contact with each other, the lubricant oil 60 can provide excellent lubrication between the bottom surface 43b of the mounting portion 43 and the bottom surface 51b of the insertion recess 51. Therefore, abrasion between the bottom surface 43b of the mounting portion 43 and the bottom surface 51b of the insertion recess 51 can be suppressed, and a decrease in fastening power of the bolt B with the second to fourth mounting members 41b, 41c, and 41d can be suppressed. Consequently, large vibration of the electric roots-type pump 10 itself can be suppressed even when the vehicle vibrates during driving.

Furthermore, the seal member 48 is disposed on the opening side of the insertion recess 51 relative to the area between the mounting portion 43 and the insertion recess 51 in which the lubricant oil 60 is filled. Accordingly, the seal member 48 seals a section on the opening side of the insertion recess 51 relative to the area between the mounting portion 43 and the insertion recess 51 in which the lubricant oil 60 is filled, so that the seal member 48 can prevent the lubricant oil 60, which is filled into the insertion recess 51, from leaking out of the insertion recess 51.
(2) Even when the mounting portion 43 moves within the insertion recess 51 due to thermal expansion of the housing H and the body Bd, the seal member 48 is elastically deformed, thereby maintaining a seal between the outer peripheral surface 43a of the mounting portion 43 and the inner peripheral surface 51a of the insertion recess 51 and preventing the lubricant oil 60 from leaking out of the insertion recess 51.
(3) When the mounting portion 43 moves within the insertion recess 51 due to thermal expansion of the housing H and the body Bd, the seal member 48 can prevent collision of the outer peripheral surface 43a of the mounting portion 43 against the inner peripheral surface 51a of the insertion recess 51.
(4) According to the electric roots-type pump 10 configured as described above, axial displacement of each of the bearings 23a and 23b, and 23c for supporting the driving shaft 21 and the driven shaft 22 can be suppressed as much as possible, and interference between both rotors 27 and 28 can be suppressed.

The above embodiment may be modified as follows.

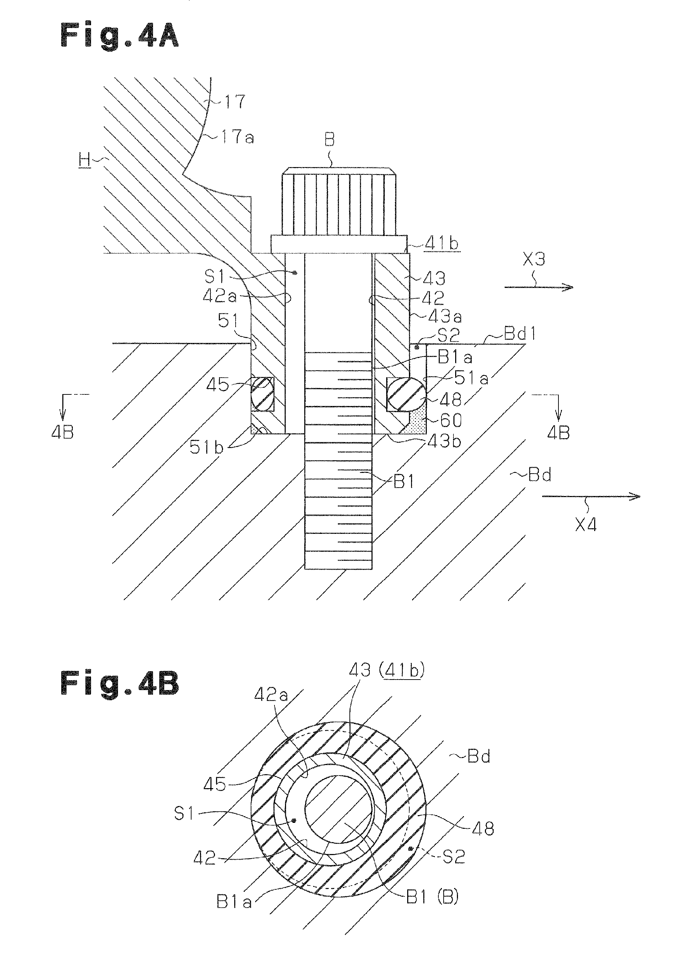

In the above embodiment, the temperature of the housing H is higher than that of the body Bd, and the amount of deformation of the housing H in the direction spaced apart from the first mounting member 41a is larger than the amount of deformation of the body Bd in the direction spaced apart from the first mounting member 41a. However, the present invention is not limited thereto. For example, Figs. 4A and 4B illustrate an example where the temperature of the housing H is lower than that of the body Bd, and the amount of deformation of the housing H in a direction spaced apart from the first mounting member 41a, i.e., the direction indicated by the arrow X3 in Fig. 4A, is smaller than the amount of deformation of the body Bd in the direction spaced apart from the first mounting member 41a, i.e., the direction indicated by the arrow X4 in Fig. 4A.

In this case, for example, the mounting portion 43 of the second mounting member 41b is allowed to deform so as to be spaced apart in a direction orthogonal to the axial direction of the driving shaft 21 from the first mounting member 41a within the insertion recess 51 by the amount corresponding to the first gap S1 and the second gap S2. Specifically, since the amount of deformation of the housing H is smaller than the amount of deformation of the body Bd, the mounting portion 43 is disposed closer to the first mounting member 41a than a central portion of the insertion recess 51 within the insertion recess 51.

Further, the bolt B is allowed to move along a direction orthogonal to the axial direction of the driving shaft 21 along with the deformation of the body Bd within the insertion hole 42, by the amount corresponding to the first gap S1. Specifically, since the amount of deformation of the housing H is smaller than the amount of deformation of the body Bd, the bolt B is arranged apart from the first mounting member 41a than a central portion of the insertion hole 42 within the insertion hole 42.

Instead of forming the groove 45 extending over the circumference in the outer peripheral surface 43a of the mounting portion 43 and disposing the seal member 48 in the groove 45, a groove extending over the circumference may be formed in the inner peripheral surface 51a of the insertion recess 51, and a seal member may be disposed in this groove.

The first mounting member 41a does not necessarily have to be rigidly fastened with respect to the body Bd. That is, the structure for mounting the first mounting member 41a may be the same as that of the second mounting member 41b.

Two, three, or five or more mounting members may be provided for the housing H.

The present invention is embodied as an electric roots-type pump 10, but the present invention is not limited thereto. The present invention may also be embodied as other pump or compressor types such as a scroll-type compressor, a screw-type compressor, or a piston-type compressor.

The present invention is embodied as an electric roots-type pump 10 using the electric motor 10, but the present invention is not limited thereto. For example, the present invention may also be embodied as a pump using an engine as a drive source. In this case, the pump can be mounted in a hybrid vehicle, or a vehicle that is driven only by the engine, and is mounted to the engine of the vehicle, with the body forming an engine compartment, or the like.

## Claims

1. A pump mounting structure, wherein the pump includes a housing (H), a rotation shaft (21) and a pump portion (11) being housed in the housing (H), the rotation shaft (21) being rotated by driving force of a driving source, the pump portion (11) being driven along with rotation of the rotation shaft (21), the rotation shaft (21) being rotatably supported on the housing (H) via a bearing (23a, 23c), a plurality of mounting members (41a, 41b, 41c, 41d) being provided for the housing (H), a bolt (B) being inserted into each of the plurality of mounting members (41a; 41b, 41c, 41d) and being fastened to a body to be mounted (Bd) to thereby mount the pump to the body (Bd), **characterized in that** the structure comprises:
a mounting surface (Bd1) on the body (Bd), wherein an insertion recess (51) is formed in the mounting surface (Bd1), wherein the insertion recess (51) includes an inner surface (51a);
at least one mounting member (41b) having a mounting portion (43) inserted into the insertion recess (51), wherein the mounting portion (43) has an outer surface (43a) and an insertion hole (42) through which the bolt (B) is inserted, wherein a first gap (S1) is formed between the insertion hole (42) and the bolt (B), and wherein a second gap (S2) is formed between the outer surface (43a) of the mounting portion (43) and the inner surface (51a) of the insertion recess (51);and
a seal member (48) disposed on an open side of the insertion recess (51) relative to an area between the mounting portion (43) and the insertion recess (51) into which lubricant (60) is filled.

2. The pump mounting structure according to claim 1, **characterized in that** the bolt (B) and the mounting portion (43) move relative to each other in accordance with a difference between deformation amount of the housing (H) and deformation amount of the body (Bd).

3. The pump mounting structure according to claim 1 or claim 2, **characterized in that** a groove (45) is formed in the mounting portion (43) and the seal member (48) is mounted to the groove (45).

4. The pump mounting structure according to any one of claims 1 to 3, **characterized in that** the pump is an electric roots-type pump (10).

5. The pump mounting structure according to any one of claims 1 to 4, **characterized in that** the pump is mounted to a body forming a fuel cell system mounted in a fuel cell powered vehicle,
